(19)

Europäisches
Patentamt
European
Patent Office
Office européen
des brevets

(11) **EP 1 906 209 A2**

(12) **EUROPEAN PATENT APPLICATION**

(43) Date of publication:
**02.04.2008 Bulletin 2008/14**

(51) Int Cl.:
*G01T 1/164* (2006.01)  *G01V 5/00* (2006.01)

(21) Application number: **07117101.1**

(22) Date of filing: **25.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **29.09.2006 US 541716**

(71) Applicant: **GE Security, Inc.**
**Bradenton FL 34202 (US)**

(72) Inventor: **Harding, Geoffrey**
**22547, Hamburg (DE)**

(74) Representative: **Bedford, Grant Richard**
**London Patent Operation**
**GE International Inc.**
**15 John Adam Street**
**London WC2N 6LU (GB)**

(54) **Systems and methods for classifying a substance**

(57)    A processor (190) configured to classify an unknown substance (82) based on simultaneously processing a plurality of parameters determined from a plurality of signals that are measured by at least one detector (17,18), wherein the at least one detector is located within a gantry (12) of an imaging system (10).

Fig. 1

**Description**

This invention relates generally to imaging systems and more particularly to systems and methods for classifying a substance.

Generally, a plurality of items of luggage pass through two or more stages. The first stage often includes a transmission computed tomography (CT) system capable of handling a large number of luggage articles to be checked in a piece of baggage. Materials contained in the baggage are usually identified by their attenuation coefficients. The attenuation coefficients are compared to tables and are classified into hazardous or dangerous materials and harmless materials. However, the results of the first stage can be ambiguous. In case a material has been found which is classified as a hazardous, dangerous, and harmless material, decisions based on CT data are sometimes unreliable and a false alarm can be triggered without the dangerous material being present. In case an alarm has been raised by the baggage, the baggage is passed to a second stage having a low false alarm rate where the alarm can be resolved.

In the second stage, x-rays having a polychromatic energy distribution are passed through a diaphragm to create a central x-ray beam in a fan plane that is projected into an examination region for irradiating a cross-section of the baggage. The x-ray beam is diffracted by individual sub-regions of the baggage along the cross-section in dependence of a presence of a crystalline and/or polycrystalline material in the baggage. Energy spectra of the diffracted x-ray plane fan beams are captured with a detector for converting the captured energy spectra into signals usable in a data processing arrangement. However, at the second stage, the whole baggage has to be rescanned, and the rescanning takes a long time and reduces the speed and efficiency of a baggage inspection system including the first and second stages. Moreover, whether the baggage is passed to the second stage is dependent on the ambiguous results of the first stage.

In one aspect according to the present invention, a method for classifying an unknown substance is provided. The method includes classifying the unknown substance based on simultaneously processing a plurality of parameters determined from a plurality of signals that are measured by at least one detector. The at least one detector is located within a gantry of an imaging system.

In another aspect, a processor for classifying an unknown substance is provided. The processor is configured to classify the unknown substance based on simultaneously processing a plurality of parameters determined from a plurality of signals that are measured by at least one detector. The at least one detector is located within a gantry of an imaging system.

In yet another aspect, an imaging system for classifying an unknown substance is provided. The imaging system includes a source configured to generate energy, at least one detector, and a processor coupled to the source and configured to classify the unknown substance based on simultaneously processing a plurality of parameters determined from a plurality of signals that are measured by the at least one detector. The at least one detector is located within a gantry of the imaging system.

Various aspects and embodiments of the present invention are described below in connection with the accompanying drawings, in which:

Figure 1 is an isometric view of an embodiment of a system for classifying a substance.

Figure 2 is a block diagram of an embodiment of the system of Figure 1.

Figure 3 is a flowchart of an embodiment of a method for classifying a substance.

Figure 4 shows a diffraction profile generated by a processor of the system of Figure 2.

Figure 5 shows a dotted line and a solid curve generated by the processor of the system of Figure 2.

Figure 6 is a continuation of the flowchart of Figure 3.

Figure 7 is a continuation of the flowchart of Figure 6.

Figure 8 shows an independent atom model curve generated by applying the method of Figures 3, 6 and 7.

Figure 9 shows an embodiment of a molecular interference function and an embodiment of an approximation function generated by applying the method of Figures 3, 6 and 7.

Figure 10 is a block diagram of a front view of an embodiment of a system for classifying a substance.

Figure 11 is a continuation of the flowchart of Figure 7.

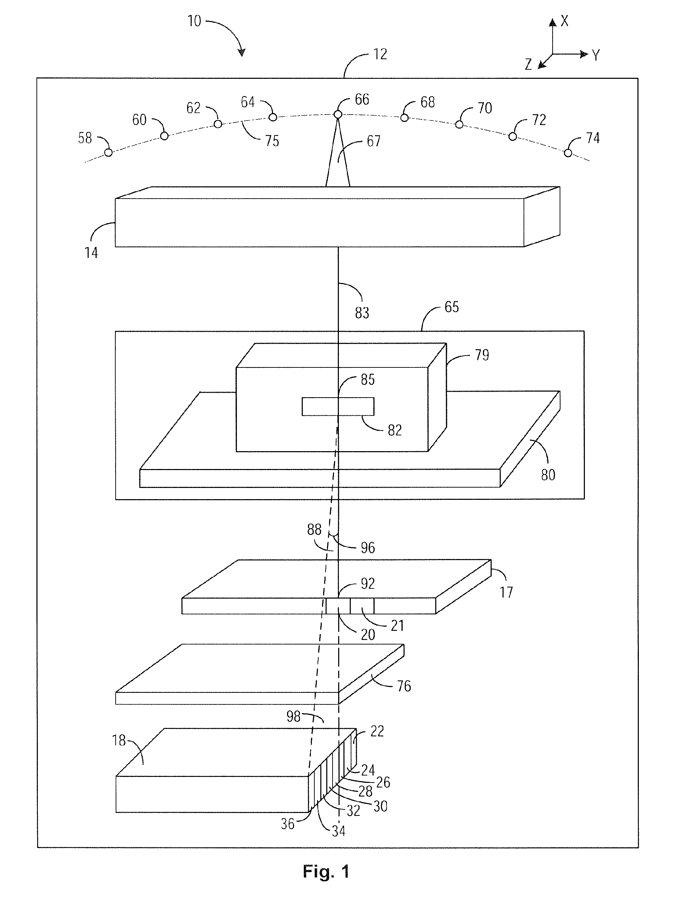

Figure 1 is an isometric view of an embodiment of a system 10 for classifying a substance. System 10 includes a gantry 12. Gantry 12 includes a primary collimator 14, a transmission detector 17, a scatter detector 18, and a secondary collimator 76. Scatter detector is a segmented semiconductor detector.

Transmission detector 17 includes a plurality of transmission detector cells or transmission detector elements, such as transmission detector elements 20 and 21. Scatter detector 18 includes a plurality of scatter detector elements 22, 24, 26, 28, 30, 32, 34, and 36 for detecting coherent scatter. Scatter detector 18 includes any number, such as, ranging from and including 5 to 1200, of scatter detector elements. For example, scatter detector 18 includes a number, such as ranging from and including 5 to 40, of scatter detector elements in a z-direction parallel to a z-axis, and a number, such as ranging from and including 1 to 30 scatter detector elements in a y-direction parallel to a y-axis. An x-axis, the y-axis, and the z-axis are located within an xyz co-ordinate system. The x-axis is perpendicular to the y-axis and the z-axis, and the y-axis is perpendicular to the z-axis, and the x-axis is parallel to an x-direction. A plurality of x-ray sources 58, 60, 62, 64, 66, 68, 70, 72, and 74, of system 10, and transmission detector 17 form an inverse single-pass multi-focus imaging system. X-ray sources 58, 60, 62, 64, 66, 68, 70, 72, and 74 have an inverse fan-beam geometry that includes a symmetric location of the x-ray sources relative to the z-axis.

Scatter detector 18 and transmission detector 17 are located in the same yz plane. The yz plane is formed by the y-axis and the z-axis. Scatter detector 18 is separate from transmission detector 17 by a shortest distance or a gap ranging from and including 30 millimeters (mm) to 60 mm in the z-direction.

X-ray sources 58, 60, 62, 64, 66, 68, 70, 72, and 74, within gantry 12, are parallel to and coincident with an arc 75 of a circle. It is noted that in an alternative embodiment, system 10 includes a higher number, such as 10 or 20, or alternatively a lower number, such as 4 or 6, of x-ray sources than that shown in Figure 1. A center of transmission detector 17 is located at a center of the circle having arc 75. Each x-ray source 58, 60, 62, 64, 66, 68, 70, 72, and 74 is an x-ray source that includes a cathode and an anode. Alternatively, each x-ray source 58, 60, 62, 64, 66, 68, 70, 72, and 74 is an x-ray source that includes a cathode and all x-ray sources 58, 60, 62, 64, 66, 68, 70, 72, and 74 share a common anode. Examples of each x-ray source 58, 60, 62, 64, 66, 68, 70, 72, and 74 include a polychromatic x-ray source.

A container 79 is placed on a support 80 between x-ray sources 58, 60, 62, 64, 66, 68, 70, 72, and 74 and scatter detector 18. Container 79 and support 80 are located within an opening 65 of gantry 12. Examples of container 79 include a bag, a box, and an air cargo container. Container 79 includes an unknown substance 82. Examples of unknown substance 82 include an organic explosive, an amorphous substance having a crystallinity of less than twenty five percent, a quasi-amorphous substance having a crystallinity at least equal to twenty-tive percent and less than fifty percent, and a partially crystalline substance having a crystallinity at least equal to fifty percent and less than one-hundred percent. Examples of the amorphous, quasi-amorphous, and partially crystalline substances include a gel explosive, a slurry explosive, an explosive including ammonium nitrate, and a special nuclear material. Examples of the special nuclear material include plutonium and uranium. Examples of support 80 include a table and a conveyor belt. An example of scatter detector 18 includes a segmented detector fabricated from Germanium.

X-ray source 66 emits an x-ray beam 67 in an energy range, which is dependent on a voltage applied by a power source to x-ray source 66. Primary collimator 14 generates a primary beam 83 upon collimating x-ray beam 67 from x-ray source 66. Primary beam 83 passes through a point 85 on unknown substance 82 within container 79 arranged on support 80 to generate scattered radiation 88.

Secondary collimator 76 is located between support 80 and scatter detector 18. Secondary collimator 76 includes a number of collimator elements, such as sheets, slits, or laminations, to ensure that a portion 98 of scattered radiation 88 arriving at scatter detector 18 has a constant scatter angle with respect to primary beam 83 and that a position of scatter detector 18 permits a depth in container 79 at which scattered radiation 88 originated to be determined. For example, the collimator elements of secondary collimator 76 are arranged parallel to a direction of portion 98 to absorb some of the scattered radiation 88 that is not parallel to the direction of the collimator elements.

The number of collimator elements in secondary collimator 76 provided is equal to or alternatively greater than a number of detector elements of scatter detector 18 and the collimator elements are arranged such that scattered radiation between neighboring collimator elements is incident on one of the detector elements. The collimator elements of secondary collimator 76 are made of a radiation-absorbing material, such as, steel, copper, silver, or tungsten.

Underneath support 80, there is arranged transmission detector 17, which measures an intensity of primary beam 83 at a point 92 on transmission detector 17. Moreover, underneath support 80, there is arranged scatter detector 18 that measures photon energies of portion 98 received by scatter detector 18. Scatter detector 18 measures the x-ray photons within portion 98 received by scatter detector 18 in an energy-sensitive manner by outputting a plurality of electrical output signals linearly dependent on a plurality of energies of the x-ray photons detected from within portion 98 of scattered radiation 88.

Scatter detector 18 detects portion 98 to generate a plurality of electrical output signals. Scatter detector 16 detects portion 98 generated upon collimation of scattered radiation 88 by secondary collimator 76. A scatter angle 96 is formed between primary beam 83 and scattered radiation 88. Scatter angle 96 includes an angle ranging from and including 0.025 radians to 0.045 radians. In an alternative embodiment, system 10 does not include primary collimator 14 and secondary collimator 76.

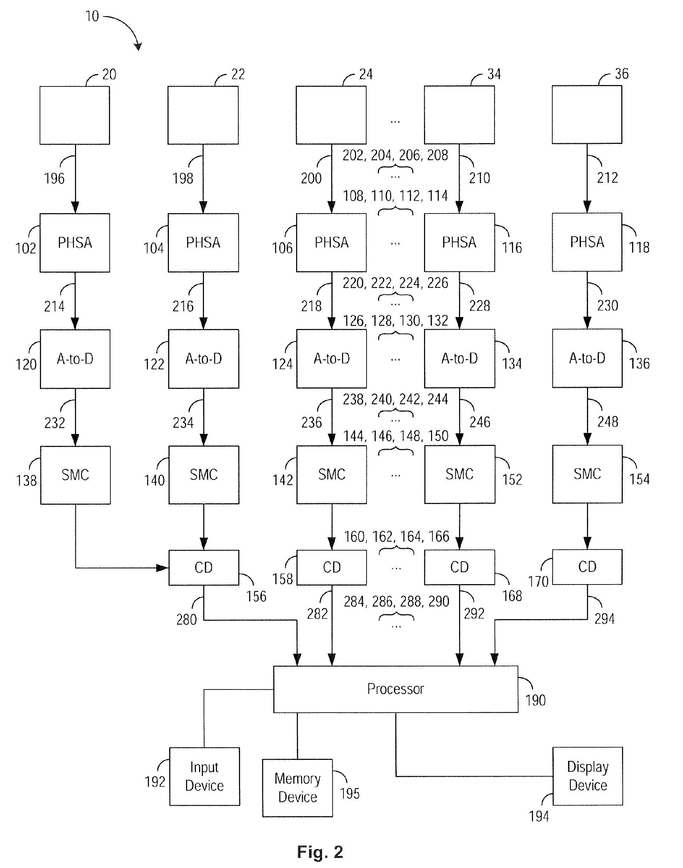

Figure 2 is a block diagram of an embodiment of a system 10 for classifying a substance. System 10 includes transmission detector element 20, scatter detector elements 22, 24, 26, 28, 30, 32, 34, and 36, a plurality of pulse-height shaper amplifiers (PHSA) 102, 104, 106, 108, 110, 112, 114, 116, and 118, a plurality of analog-to-digital (A-to-D) converters 120, 122, 124, 126, 128, 130, 132, 134, and 136, a plurality of spectrum memory circuits (SMCs) 138, 140, 142, 144, 146, 148, 150, 152, and 154 allowing pulse height spectra to be acquired, a plurality of correction devices (CDs) 156, 158, 160, 162, 164, 166, 168, and 170, a processor 190, an input device 192, a display device 194, and a memory device 195. As used herein, the term processor is not limited to just those integrated circuits referred to in the art as a processor, but broadly refers to a computer, a microcontroller, a microcomputer, a programmable logic controller, an application specific integrated circuit, and any other programmable circuit. The computer may include a device, such as, a floppy disk drive or CD-ROM drive, for reading data including the methods for classifying a substance from a computer-readable medium, such as a floppy disk, a compact disc - read only memory (CD-ROM), a magneto-optical disk (MOD), or a digital versatile disc (DVD). In another embodiment, processor 190 executes instructions stored in firmware. Examples of display device 194 include a liquid crystal display (LCD) and a cathode ray tube (CRT). Examples of input device 192 include a mouse and a keyboard. Examples of memory device 195 include a random access memory (RAM) and a read-only memory (ROM). An example of each of correction devices 156, 158, 160, 162, 164, 166, 168, and 170 include a divider circuit. Each of spectrum memory circuits 138, 140, 142, 144, 146, 148, 150, 152, and 154 include an adder and a memory device, such as a RAM or a ROM.

Transmission detector element 20 is coupled to pulse-height shaper amplifier 102, and scatter detector elements 22, 24, 26, 28, 30, 32, 34, and 36 are coupled to pulse-height shaper amplifiers 104, 106, 108, 110, 112, 114, 116, and 118, respectively. Transmission detector element 20 generates an electrical output signal 196 by detecting primary beam 83 and scatter detector elements 22, 24, 26, 28, 30, 32, 34, and 36 generate a plurality of electrical output signals 198, 200, 202, 204, 206, 208, 210, and 212 by detecting portion 98. For example, scatter detector element 22 generates electrical output signal 198 for each scattered x-ray photon incident on detector element 22. Each pulse-height shaper amplifier amplifies an electrical output signal received from a detector element. For example, pulse-height shaper amplifier 102 amplifies electrical output signal 196 and pulse-height shaper amplifier 104 amplifies electrical output signal 198. Pulse-height shaper amplifiers 102, 104, 106, 108, 110, 112, 114, 116, and 118 have a gain factor determined by processor 190.

An amplitude of an electrical output signal output from a detector element is proportional to an integrated intensity of an x-ray quantum that is detected by the detector element to generate the electrical output signal. For example, an amplitude of electrical output signal 196 is proportional to an integrated intensity of an x-ray quantum in primary beam 83 detected by transmission detector element 20. An amplitude of electrical output signal 198 is proportional to an integrated intensity of an x-ray quantum within portion 98 that is detected by scatter detector element 22.

A pulse-height shaper amplifier generates an amplified output signal by amplifying an electrical output signal generated from a detector element. For example, pulse-height shaper amplifier 102 generates an amplified output signal 214 by amplifying electrical output signal 196 and pulse-height shaper amplifier 104 generates an amplified output signal 216 by amplifying electrical output signal 198. Similarly, a plurality of amplified output signals 218, 220, 222, 224, 226, 228, and 230 are generated. An analog-to-digital converter converts an amplified output signal from an analog form to a digital form to generate a digital output signal. For example, analog-to-digital converter 120 converts amplified output signal 214 from an analog form to a digital format to generate a digital output signal 232. Similarly, a plurality of digital output signals 234, 236, 238, 240, 242, 244, 246, and 248 are generated by analog-to-digital converters 122, 124, 126, 128, 130, 132, 134, and 136, respectively. A digital value of a digital output signal generated by an analog-to-digital converter represents an amplitude of energy or an amplitude of intensity of a pulse of an amplified output signal. Each pulse is generated by an x-ray quantum, such as an x-ray photon. For example, a digital value of digital output signal 234 output by analog-to-digital converter 122 is a value of an amplitude of a pulse of amplified output signal 216.

An adder of a spectrum memory circuit adds a number of pulses in digital output signals. For example, when analog-to-digital converter 122 converts a pulse of amplified output signal 216 into digital output signal 234 to determine an amplitude of the pulse of amplified output signal 216, an adder within spectrum memory circuit 140 increments, by one, a value within a memory device of spectrum memory circuit 140. Accordingly, at an end of an x-ray examination of unknown substance 82, a memory device within a spectrum memory circuit stores a number of x-ray quanta detected by a detector element. For example, a memory device within spectrum memory circuit 142 stores a number of x-ray photons detected by scatter detector element 24 and each of the x-ray photons has an amplitude of energy or an amplitude of intensity that is determined by analog-to-digital converter 124.

A correction device receives a number of x-ray quanta that have a range of energies and are stored within a memory device of one of spectrum memory circuits 140, 142, 144, 146, 148, 150, 152, and 154, and divides the number by a number of x-ray quanta having the range of energies received from a memory device of spectrum memory circuit 138. For example, correction device 156 receives a number of x-ray photons having a range of energies from a memory device of spectrum memory circuit 140, and divides the number by a number of x-ray photons having the range received from a memory device of spectrum memory circuit 138. Each correction device outputs a correction output signal that represents a range of energies within x-ray quanta received by a detector element. For example, correction device 156 outputs a correction output signal 280 representing an energy spectrum or an intensity spectrum within x-ray quanta detected by scatter detector element 22. As another example, correction device 158 outputs correction output signal 282 representing an energy spectrum within x-ray quanta detected by scatter detector element 24.

Similarly, a plurality of correction output signals 284, 286, 288, 290, 292, and 294 are generated by correction devices 160, 162, 164, 166, 168, and 170, respectively.

Processor 190 receives correction output signals 280, 282, 284, 286, 288, 290, 292, and 294 to generate a momentum transfer x, measured in inverse nanometers ($nm^{-1}$), from an energy spectrum r(E) of energy E of x-ray quanta within portion 98 detected by scatter detector 18. Processor 190 generates the momentum transfer x by applying

$$x = (E/hc)\sin(\theta/2) \qquad\qquad ...(1)$$

where c is a speed of light, h is Planck's constant, $\theta$ represents a constant scatter angle, such as scatter angle 96, of x-ray quanta of the portion 98 detected by scatter detector 18. Processor 190 relates the energy E to the momentum transfer x by equation (1). Mechanical dimensions of secondary collimator 16 define the scatter angle $\theta$. Secondary collimator 16 restricts some of scatter radiation 88 that does not have the angle $\theta$. Processor 190 receives the scatter angle $\theta$ from a user or a person via input device 192 to generate the momentum transfer x by applying equation (1). Processor 190 generates a diffraction profile D(x) from correction output signals 280, 282, 284, 286, 288, 290, 292, and 294.

It is noted that a number of pulse-height shaper amplifiers 102, 104, 106, 108, 110, 112, 114, 116, and 118 changes with a number of detector elements 20, 22, 24, 26, 28, 30, 32, 34, and 36. For example, five pulse-height shaper amplifiers are used for amplifying signals received from five detector elements. As another example, four pulse-height shaper amplifiers are used for amplifying signals received from four detector elements. Similarly, a number of analog-to-digital converters 120, 122, 124, 126, 128, 130, 132, 134, and 136 changes with a number of detector elements 20, 22, 24, 26, 28, 30, 32, 34, and 36 and a number of spectrum memory circuits 138, 140, 142, 144, 146, 148, 150, 152, and 154 changes with the number of detector elements 20, 22, 24, 26, 28, 30, 32, 34, and 36.

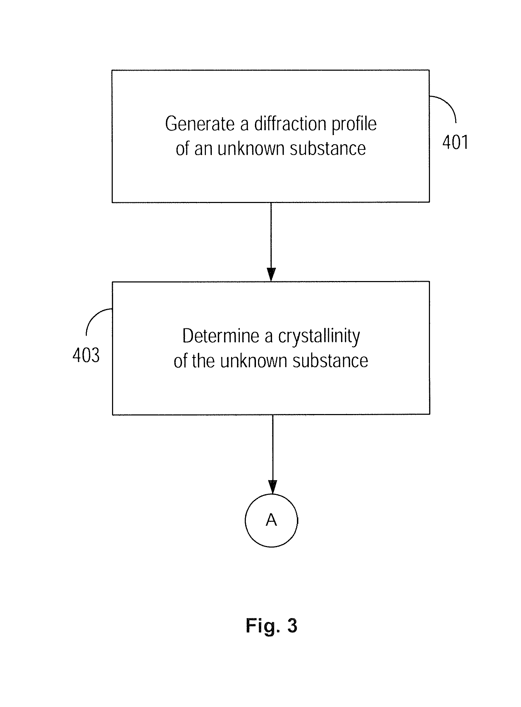

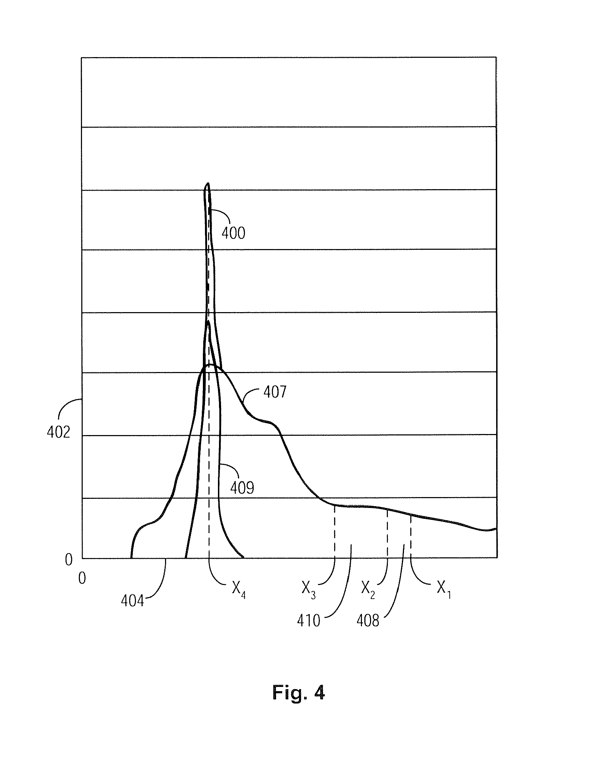

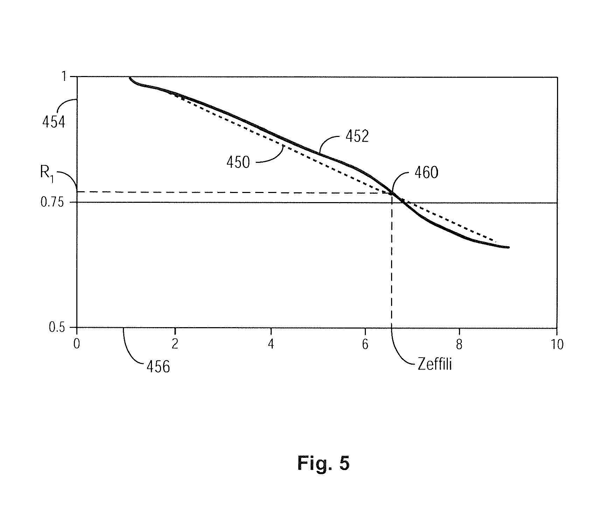

Figure 3 is a flowchart of an embodiment of a method for classifying a substance, Figure 4 shows a graph 400 generated 401 by processor 190, and Figure 5 shows a dotted line 450 and a solid curve 452 generated by processor 190. Graph 400 is an example of the diffraction profile D(x). Graph 400 is a histogram of numbers of x-ray photons at a plurality of momentum transfer values, such as $x_1$, $x_2$, and $x_3$, of the momentum transfer x. As an example, when an operating voltage of x-ray source 66 is 160 kilovolts, processor 190 calculates, by applying equation 1, an energy value $E_1$ of the energy E to be 160 kilo electron Volts (keV), calculates, by applying equation 1, an energy value $E_2$ of the energy E to be 140 keV, and calculates, by applying equation I, an energy value $E_3$ of the energy value E to be photon energy 120 keV. In the example, the photon energy values $E_1$, $E_2$, and $E_3$ correspond, through equation 1, to $x_1$ of four inverse nanometers, $x_2$ of 3.5 inverse nanometers, and to $x_3$ of three inverse nanometers, respectively. Graph 400 represents a histogram of numbers of x-ray photons detected by scatter detector 18 versus the momentum transfer x of the x-ray photons. A number of photons detected by scatter detector 18 is plotted along an ordinate 402 and the momentum transfer x is plotted along an abscissa 404. As an example, abscissa 404 extends from and includes zero inverse nanometers to at most 10 inverse nanometers. An example of a total number of bins of numbers of x-ray photons plotted on ordinate 402 lies between 64 and 1024. An example of a number of x-ray photons detected by scatter detector 18 per examination lies between 1000 and 100,000.

Graph 400 ranging from $x \geq 3$ $nm^{-1}$ is dominated by coherent scatter from free atoms of unknown substance 82. In a tip region, extending from $x_1$ to $x_3$, of graph 400, an intensity of portion 98 is proportional to a product of an effective density of unknown substance 82 and a power, such as ranging between 2.5 and 3.5, of an effective atomic number of unknown substance 82.

Processor 190 determines 403 a crystallinity $C_u$ of unknown substance 82 from the diffraction profile D(x). Processor 190 applies a Fourier transform to the diffraction profile D(x) to transform the diffraction profile D(x) from a momentum transfer domain to a frequency domain. In the frequency domain, an amorphous portion of unknown substance 82 has a plurality of amorphous frequencies that are different than a plurality of crystalline frequencies of a crystalline portion of unknown substance 82. The Fourier transform possesses a frequency band in which a plurality of contributions or amplitudes of peaks representing a crystalline nature of unknown substance 82 are different than a plurality of contributions of peaks representing an amorphous nature of unknown substance 82. Processor 190 applies an inverse Fourier transform to the frequency band to generate an amorphous momentum transfer domain curve 407 and a crystalline momentum transfer domain curve 409. Graph 400 is a sum of amorphous momentum transfer domain curve 407 and crystalline momentum transfer domain curve 409. An example of a computer software that generates an amorphous momentum transfer domain curve and a crystalline momentum transfer domain curve from a diffraction profile includes "OptiFit" computer software, described in Rabiej M, Determination of the Degree of Crystallinity of Semicrystalline Polymers by Means of the "OptiFit" Computer Software, POEIMERY 6, pages 423-427 (2002).

Processor 190 determines a crystalline area under crystalline momentum transfer domain curve 409 and determines a total area under graph 400. Processor 190 divides the crystalline area by the total area to determine 403 the crystallinity $C_u$ of unknown substance 82. An example of an application of the Fourier transform to determine a crystallinity from a diffraction profile is provided in Percentage Crystallinity Determination by X-ray Diffraction, XRD-6000 Application Brief, Kratos Analytical (1999).

Processor 190 plots solid curve 452 that represents a theoretical relationship between a ratio of total free atom scatter cross-sections, referred to as total scatter cross-sections or cumulative scatter cross-sections, and an atomic number Z. As an example, processor 190 plots solid curve 452 from an example of the theoretical relationship mentioned in Hubbell, J.H., Veigele, W.J., Briggs, E.A., Brown, R.T., Cromer, D.T., Howerton, R.J., Atomic Form Factors, Incoherent Scattering Functions and Photon Scattering Cross-sections, Journal of Physics and Chemical Reference Data, Volume 4, page 471 (1975), Erratum: Atomic Form Factors, Incoherent Scattering Functions, and Photon Scattering Cross Sections, Journal of Physics and Chemical Reference Data, Volume 6, page 615 (1977). As another example, the theoretical relationship includes an atomic number value of oxygen as eight corresponding to a ratio of 0.68 of total scatter cross-sections calculated for oxygen. As yet another example, the theoretical relationship includes an atomic number value of carbon as six corresponding to a ratio of 0.73 of total scatter cross-sections calculated from carbon. As still another example, processor 190 calculates a ratio of a total scatter cross-section of hydrogen at the momentum transfer value $x_3$ and a total scatter cross-section of hydrogen at the momentum transfer value $x_2$, and plots the ratio on solid curve 452. As another example, processor 190 calculates a ratio of a total scatter cross-section of flourine at the momentum transfer value $x_2$ and a total scatter cross-section of flourine at the momentum transfer value $x_1$, and plots the ratio on solid curve 452. As yet another example, processor 190 calculates a ratio of a total scatter cross-section of carbon at the momentum transfer value $x_2$ and a total scatter cross-section of carbon at the momentum transfer value $x_1$, and plots the ratio on solid curve 452. Processor 190 generates dotted line 450 as a linear fit or linear regression to the theoretical relationship.

A plurality of ratios of total scatter cross-sections are plotted along an ordinate 454 and a plurality of atomic numbers Z are measured along an abscissa 456. For example, a plurality of atomic number values on dotted line 450 extend from an atomic number one of hydrogen to an atomic number nine of fluorine. In the example, a plurality of ratios of total scatter cross-sections are calculated at momentum transfer values within a first set of regions of a plurality of bands 408 and 410 and total scatter cross-sections are calculated at momentum transfer values within a second set of regions of bands 408 and 410.

A number of x-ray photons that are scattered with momentum transfer values between $x_1$ and $x_2$ are represented within band 408 under graph 400. Processor 190 determines a cumulative number of x-ray photons within band 408 by cumulatively summing a number of photons between momentum transfer values $x_1$ and $x_2$ on abscissa 404. A number of x-ray photons that are scattered with momentum transfer values between $x_2$ and $x_3$ are located within band 410 under graph 400. Processor 190 determines a cumulative number of x-ray photons within band 410 by cumulatively summing a number of x-ray photons between momentum transfer values $x_2$ and $x_3$ on abscissa 404.

Processor 190 calculates a ratio of cumulative numbers of x-ray photons within bands 408 and 410. For example, processor 190 determines that $R_1$ is a ratio of a cumulative number of x-ray photons within band 408 to a cumulative number of x-ray photons within band 410. Processor 190 determines 458, by using the solid curve 452, an effective atomic number $Z_{effu}$ corresponding to a ratio of a cumulative number of x-ray photons within band 408 and a cumulative number of x-ray photons within band 410. As an example, processor 190 perpendicularly extends a horizontal line, parallel to abscissca 456, from the ratio $R_1$ to intersect solid curve 452 at an intersection point 460 and extends a line, parallel to ordinate 454, from intersection point 460 to perpendicularly intersect abscissa 456 at an effective atomic number value $Z_{effu1}$. Alternatively, processor 190 determines, by using the dotted line 450, the effective atomic number $Z_{effu}$ corresponding to a ratio of a cumulative number of x-ray photons within band 408 and a cumulative number of x-ray photons within band 410. As an example, processor 190 perpendicularly extends a horizontal line, parallel to abscissca 456, from the ratio $R_1$ to intersect dotted line 450 at an intersection point and extends a line, parallel to ordinate 454, from the intersection point to perpendicularly intersect abscissa 456 at an effective atomic number value $Z_{effu2}$.

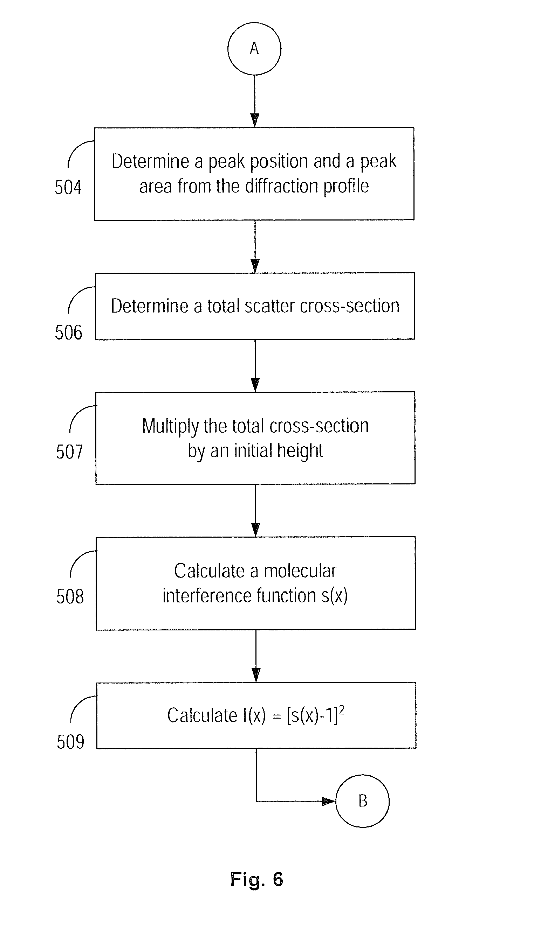

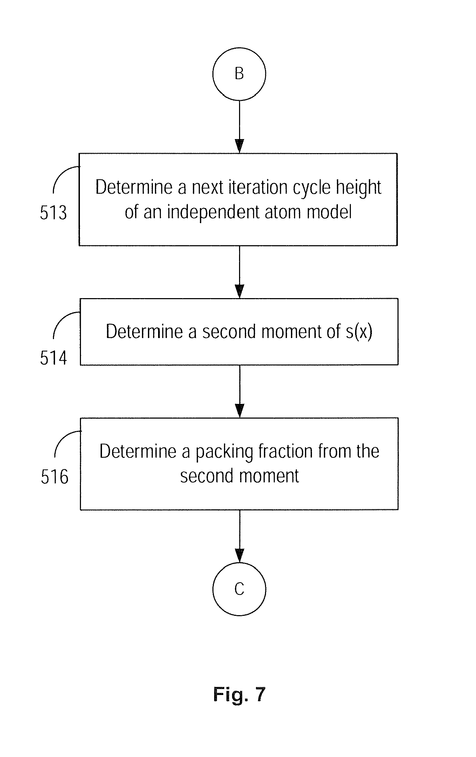

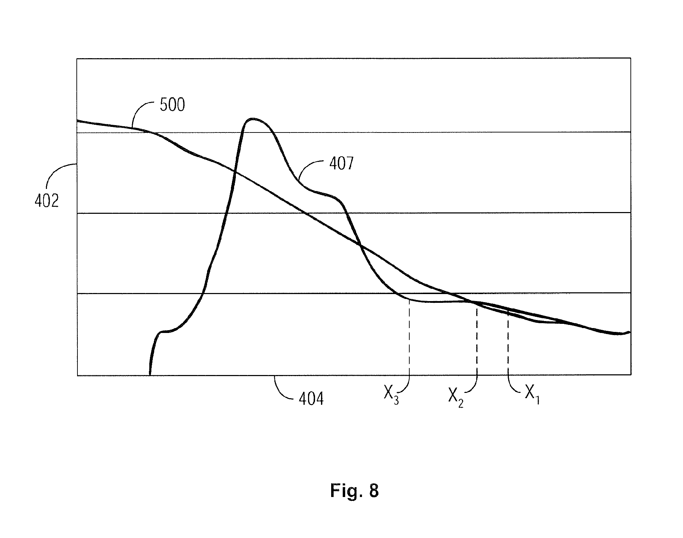

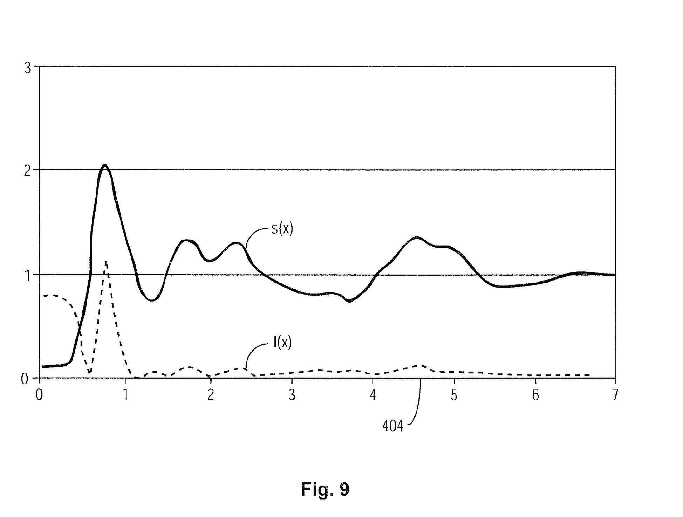

Figures 6 and 7 are a flowchart of an embodiment of a method of classifying a substance, Figure 8 shows an embodiment of an independent atom model (IAM) curve 500 generated by processor 190, and Figure 9 shows a plurality of embodiments of a plurality of graphs s(x) and I(x) generated by processor 190. The graph s(x) represents a molecular interference function and the graph I(x) represents an approximation function.

Processor 190 determines 504 a peak position $p_u$ from graph 400. For example, processor 190 determines that graph 400 has a peak area at a momentum transfer value of $X_4$, which is an example of the peak position $p_u$. In the

example, processor 190 determines the momentum transfer value of $X_4$ by generating a derivative of graph 400 with respect to the momentum transfer x and determining the momentum transfer value $X_4$ at which the derivative of graph 400 is zero. If processor 190 determines a plurality of momentum transfer values of the momentum transfer x at which the derivative of graph 400 is zero, processor 190 selects one of the momentum transfer values on graph 400 at which a number of x-ray photons on graph 400 is higher than the remaining numbers of x-ray photons that are plotted on graph 400 and that correspond to the remaining of the momentum transfer values on graph 400. For example, when processor 190 determines the momentum transfer value $X_4$ and a momentum transfer value $x_5$ are values on graph 400 at which the derivative of graph 400 is zero, processor 190 selects the momentum transfer value $X_4$ at which a number of x-ray photons, on graph 400, having the momentum transfer value $X_4$ are higher than a number of x-ray photons, on graph 400, having the momentum transfer value $X_5$.

Processor 190 determines 504 a number of x-ray photons corresponding to the peak position $p_u$ as a peak area $a_u$. For example, processor 190 determines a peak area as a number $n_1$ of x-ray photons by extending a line vertically, parallel to ordinate 402, from $x_4$ to graph 400 to generate an intersection point on graph 400 and extending a line horizontally, parallel to abscissca 404, from the intersection point to ordinate 402.

Processor 190 determines 506 a total scatter cross-section of IAM curve 500 from the effective atomic number $Z_{effu}$ that is illustrated in Figure 5. For example, upon determining by processor 190 that the effective atomic number value $Z_{effu1}$ is a rational number, such as 6.3, processor 190 generates a weighted average of a plurality of IAM functions corresponding to neighboring atomic numbers six and seven. In the example, processor 190 generates the weighted average, such as 1/3[IAM(6)] + 2/3[IAM(7)], where IAM(6) is a total scatter cross-section for carbon and IAM(7) is a total scatter cross-section for nitrogen. An example of the IAM functions corresponding to neighboring atomic numbers are available in Hubbell, J.H., Veigele, W.J., Briggs, E.A., Brown, R.T., Cromer, D.T., Howerton, R.J., Atomic Form Factors, Incoherent Scattering Functions and Photon Scattering Cross-sections, Journal of Physics and Chemical Reference Data, Volume 4, page 471 (1975), Erratum: Atomic Form Factors, Incoherent Scattering Functions, and Photon Scattering Cross Sections, Journal of Physics and Chemical Reference Data, Volume 6, page 615 (1977). The weighted average is an example of a total scatter cross-section, determined in 506, of IAM curve 500.

Alternatively, instead of generating the weighted average, upon determining by processor 190 that the effective atomic number value $Z_{effu1}$ is the rational number, processor 190 generates a closest total scatter cross-section of an IAM curve corresponding to an atomic number value, which is an integer closest to the rational number and plots, with respect to y-axis 402, the closest total scatter cross-section. In yet another alternative embodiment, instead of generating the weighted average, upon determining by processor 190 that the effective atomic number value $Z_{effu1}$ is the rational number, processor 190 generates a universal total scatter cross-section of an IAM curve by scaling the momentum transfer x of IAM curve 500 in Figure 8. As an example, abscissa 404 in Figure 8 is scaled by multiplying the momentum transfer x of IAM curve 500 with $0.02Z_{effu1} + 0.12$ to generate the universal total scatter cross-section.

Processor 190 multiplies 507 a total scatter cross-section, determined in 506, by an initial amplitude or an initial height to generate a first iteration cycle free atom curve. For example, processor 190 multiplies each value of a total scatter cross-section, determined in 506, with the initial height to generate the first iteration cycle free atom curve. Processor 190 receives the initial height from the user via input device 192. Processor 190 calculates 508 the molecular interference function s(x) by dividing a number of x-ray photons represented by amorphous momentum transfer domain curve 407 by the first iteration cycle free atom curve. As an example, processor 190 generates a molecular interference value $s_1(x)$ of the molecular interference function s(x) by dividing a number of x-ray photons having the momentum transfer value $x_1$ that lies on amorphous momentum transfer domain curve 407 by a number of x-ray photons having the momentum transfer value $x_1$ that lies on the first iteration cycle free atom curve. As another example, processor 190 generates a molecular interference value $s_2(x)$ of the molecular interference function s(x) by dividing a number of x-ray photons having the momentum transfer value $x_2$ that lies on amorphous momentum transfer domain curve 407 by a number of x-ray photons having the momentum transfer value $x_2$ that lies on the first iteration cycle free atom curve.

Processor 190 calculates 512 the approximation function I(x) as

$$I(x) = \left[ s(x) - 1 \right]^2 \qquad \qquad \ldots(2)$$

Processor 190 determines 513 a next iteration cycle amplitude $I_{min}$ or a next iteration cycle height of IAM curve 500 by minimizing an integral of I(x) represented as

$$\int_{0}^{x_{max}} I(x)\,dx \qquad\qquad \ldots(3)$$

where $x_{max}$ is the largest value of x on abscissa 404 of amorphous momentum transfer domain curve 407 and IAM curve 500. For example, processor 190 determines the next iteration cycle height $I_{min}$ by selecting a minimum from a first and a second calculated value. Processor 190 determines the first calculated value by applying 507, 508, 512, and equation (3) to the initial height. Processor 190 determines the second calculated value by applying 507, 508, 512, and equation (3) to a changed height instead of the initial height. For example, processor 190 multiplies a total scatter cross-section, determined in 506, by the changed height to generate a second iteration cycle free atom curve, calculates the molecular interference function s(x) by dividing a number of x-ray photons represented by amorphous momentum transfer domain curve 407 by the second iteration cycle free atom curve, calculates the approximation function I(x) from equation (2), and generates the second calculated value by applying equation (3). Processor 190 generates the changed height by modifying, such as incrementing or decrementing, the initial height. As another example, processor 190 determines the next iteration cycle height $I_{min}$ by selecting a minimum from a plurality, such as three, of calculated values, such as the first calculated value, the second calculated value, and a third calculated value. Processor 190 generates the third calculated value in a similar manner in which first and second calculated values are generated. For example, processor 190 generates the third calculated value after incrementing or alternatively decrementing the changed height.

Processor 190 determines 514 a second moment X2S of I(x) by applying

$$X2S \;=\; \frac{\int_{0}^{\infty} x^{2}\,I_{min}(x)\,dx}{\int_{0}^{\infty} I_{min}(x)\,dx} \qquad\qquad \ldots\ldots\ldots(4)$$

Processor 190 determines 516 a packing fraction $\eta_u$ of unknown substance 82 as being linearly proportional, such as equal, to the second moment X2S. The packing fraction $\eta_u$ is linearly proportional to the second moment X2S when unknown substance 82 includes a plurality of identical hard spheres over a range of $\eta$ of amorphous materials relevant in weapon, explosive and contraband detection. An example of the linearly proportional relationship includes

$$\eta_u = a(X2S) \qquad\qquad \ldots\ldots\ldots(5)$$

where a is a coefficient received by processor 190 via input device 192 from the user, and a ranges from and including 0.1 to 0.2.

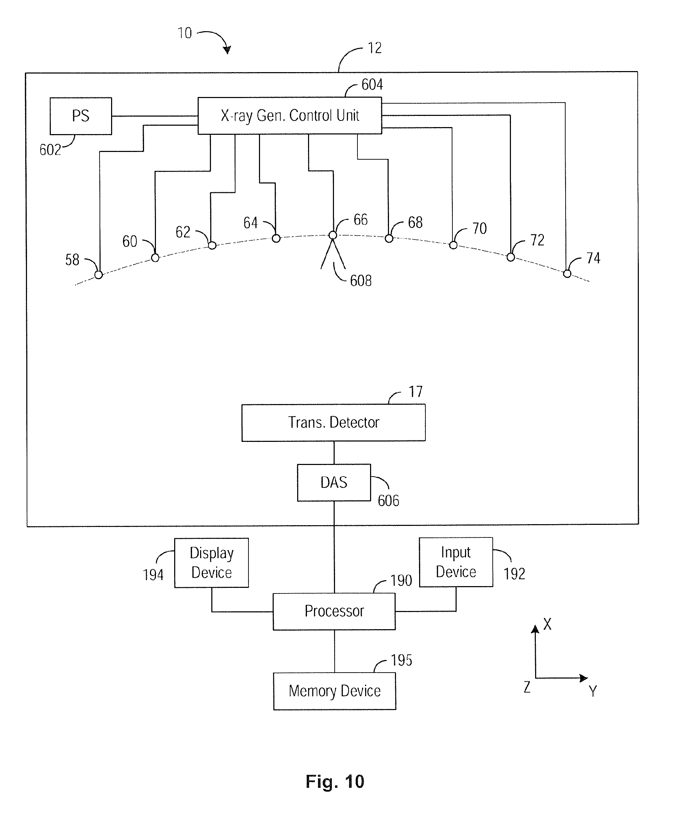

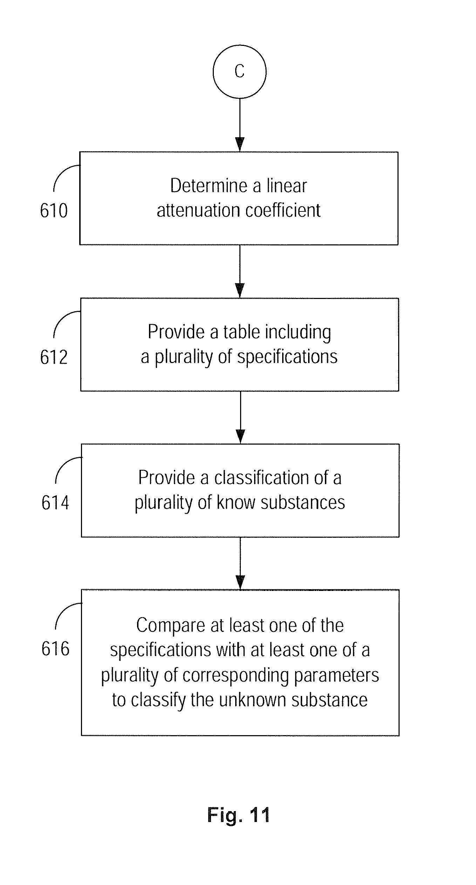

Figure 10 is a block diagram of a front view of an embodiment of system 10 for classifying a substance and Figure 11 is a flowchart of an embodiment of a method for classifying a substance. System 10 includes gantry 12, processor 190, input device 192, display device 194, and memory device 195. Gantry 12 includes opening 65 for placing container 79, secondary collimator 76, and scatter detector 18. Gantry 12 includes a power supply 602, an x-ray generation control unit 604, x-ray sources 58, 60, 62, 64, 66, 68, 70, 72, and 74, a data acquisition system (DAS) 606, and transmission detector 17. Alternatively, power supply 602 is located outside gantry 12.

X-ray generation control unit 604 includes a pulse generator (not shown) that is coupled to processor 190 and that receives power from power supply 602. Power supply 602 is coupled to x-ray sources 58, 60, 62, 64, 66, 68, 70, 72, and 74 to supply power to x-ray sources 58, 60, 62, 64, 66, 68, 70, 72, and 74.

Processor 190 issues a command, such as a first on command, a second on command, a first off command, and a second off command. Upon receiving the first on command from processor 190, the pulse generator generates a pulse and transmits the pulse to x-ray source 66. Upon receiving a pulse from the pulse generator, x-ray source 66 generates x-ray beam 67 under a potential applied by power supply 602. Similarly, upon receiving the first off command signal from processor 190, the pulse generator stops transmitting a pulse to x-ray source 66 and x-ray source 66 stops generating x-ray beam 67. Furthermore, upon receiving the second on command signal from processor 190, the pulse generator generates and transmits a pulse to any one of the remaining x-ray sources 58, 60, 62, 64, 68, 70, 72, and 74 and the one of the remaining x-ray sources 58, 60, 62, 64, 68, 70, 72, and 74 generates an x-ray beam. For example, upon receiving the second on command signal from processor 190, the pulse generator generates and transmits a pulse to x-ray source 68 and x-ray source 68 generates an x-ray beam 608. Upon receiving the second off command signal from processor 190, the pulse generator stops transmitting a pulse to any one of the remaining x-ray sources 58, 60, 62, 64, 68, 70, 72, and 74 and the one of the remaining x-ray sources 58, 60, 62, 64, 68, 70, 72, and 74 stops generating an x-ray beam. For example, upon receiving the second off command signal from processor 190, the pulse generator stops transmitting a pulse to x-ray source 68 and x-ray source 68 stops generating x-ray beam 608.

When a scan is conducted by sequentially activating x-ray sources 58, 60, 62, 64, 66, 68, 70, 72, and 74 either clockwise or counterclockwise, DAS 606 samples projection data or analog data generated from transmission detector elements, including transmission detector elements 20 and 21, of transmission detector 17 and converts the analog data to a plurality of digital signals or digitized data for subsequent processing. Processor 190 receives the digitized data from DAS 606 and performs image reconstruction to generate the x-ray image, such as a computed tomography (CT) image, of unknown substance 82. Examples of the image reconstruction include filtered backprojection (FBP) and iterative reconstruction (IR). The x-ray image may be displayed on display device 194 and stored in memory device 195. The x-ray image includes a plurality of CT numbers measured in Hounsfeld units (HUs). Each pixel in the x-ray image is represented by a CT number. For example, a pixel representing a portion of unknown substance 82 within the x-ray image has a CT number represented as $CT_{pixel}$.

Processor 190 determines 610 a linear attenuation coefficient $\mu_{pixelu}$ of substance 82 represented by a pixel of the x-ray image of unknown substance 82 from the CT number $CT_{pixel}$ of the pixel. Processor 190 determines 610 the linear attenuation coefficient $\mu_{pixelu}$ of substance 82 by applying

$$\mu_{pixelu} = \left( \frac{CT_{pixel}}{1000} \times \mu_{water} \right) + \mu_{water} \qquad \ldots (6)$$

where $\mu_{water}$ is a linear attenuation coefficient of water.

Accordingly, processor 190 determines a plurality of parameters, such as the crystallinity $C_u$, the diffraction profile $D(x)$, the peak position $p_u$, the peak area $a_u$ the effective atomic number $Z_{effu}$, the packing fraction $\eta_u$, and the linear attenuation coefficient $\mu_{pixelu}$. Processor 190 may determine any number, such as ranging from and including 5 to 100, parameters of unknown substance 82. In an alternative embodiment, processor 190 does not determine the linear attenuation coefficient $\mu_{pixelu}$ and determines at least one of the crystallinity $C_u$, the diffraction profile $D(x)$, the peak position $p_u$, the peak area $a_u$, the effective atomic number $Z_{effu}$, and the packing fraction $\eta_u$. In another alternative embodiment, processor 190 determines at least one the linear attenuation coefficient $\mu_{pixelu}$, the crystallinity $C_u$, the diffraction profile $D(x)$, the peak position $a_u$, the peak area $a_u$, the effective atomic number $Z_{effu}$, and the packing fraction $\eta_u$.

The user provides 612, to memory device 195, a table via input device 192 and the table includes a plurality of specifications, such as, a crystallinity $C_k$, a peak position $p_k$, a peak area $a_k$, an effective atomic number $Z_{effk}$, a packing fraction $\eta_k$, and a linear attenuation coefficient $\mu_{pixelk}$, of a plurality of known substances. For example, the user provides to memory device 195, via input device 192, a crystallinity value $C_{k1}$, a peak position value $p_{k1}$, a peak area value $a_{k1}$, an effective atomic number value $Z_{effk1}$, a packing fraction value $\eta_{k1}$), and a linear attenuation coefficient value $\mu_{pixelk1}$, of a first one of the known substances. As another example, the user provides to memory device 195, via input device 192. a crystallinity value $C_{k2}$, a peak position value $p_{k2}$, a peak area value $a_{k2}$, an effective atomic number value $Z_{effk2}$, a packing fraction value $\eta_{k2}$, and a linear attenuation coefficient value $\mu_{pixelk2}$, of a second one of the known substances. Examples of the known substances include cyclotrimethylene trinitramine, triazidotrinitrobenzetle, ammonium picrate, oxygen, iron, steel, cotton, polyester, plastic, heroin, morphine, and steroids. The user provides 614, via input device 192, to processor 190, a classification of the known substances and processor 190 stores the classification in the table.

The classification of the known substances includes a plurality of classes, such as a threat and a benign substance. For example, cyclotrimethylene trinitramine, triazidotrinitrobenzene, ammonium picrate, heroin, morphine, explosives, weapons, drugs of abuse, special nuclear materials, bank notes, and steroids are classified as threat substances, and cotton, oxygen, and polyester are classified as harmless substances. The threat substance is referred to as a harmful substance and the benign substance is referred to as a harmless substance.

Processor 190 compares 616 at least one of the specifications of at least one of the known substances with at least one of the parameters of unknown substance 82 to classify unknown substance 82. For example, processor 190 applies a least squares fit approach by applying

$$\Delta Q_1 = [(C_u - C_{k1})^2 + (p_u - p_{k1})^2 + (a_u - a_{k1})^2 + (Z_{effu} - Z_{effk1})^2 + (\eta_u - \eta_{k1})^2 + (\mu_{pixelu} - \mu_{pixelk1})^2]^{1/2}, \quad \ldots(7)$$

by applying

$$Q_1 = [C_{k1}^2 + p_{k1}^2 + a_{k1}^2 + Z_{effk1}^2 + \eta_{k1}^2 + \mu_{pixelk1}^2]^{1/2}, \quad \ldots(8)$$

by applying

$$\Delta Q_2 = [(C_u - C_{k2})^2 + (p_u - p_{k2})^2 + (a_u - a_{k2})^2 + (Z_{effu} - Z_{effk2})^2 + (\eta_u - \eta_{k2})^2 + (\mu_{pixelu} - \mu_{pixelk2})^2]^{1/2}, \quad \ldots(9)$$

by applying

$$Q_2 = [C_{k2}^2 + p_{k2}^2 + a_{k2}^2 + Z_{effk2}^2 + \eta_{k2}^2 + \mu_{pixelk2}^2]^{1/2}, \ldots(10)$$

calculating a ratio $\Delta Q_1/Q_1$ and a ratio $\Delta Q_2/Q_2$, determining whether each of the ratio $\Delta Q_1/Q_1$ and the ratio $\Delta Q_2/Q_2$ is within a first threshold, which is at most equal to M, or alternatively is within a second threshold, which is at most equal to N, where N is greater than M. An example of M includes 0.05 and an example of N includes 0.075. Another example of M includes 0.02 and another example of N includes 0.05. The user provides M and N via input device 192 to processor 190.

Upon determining that each of $\Delta Q_1/Q_1$ and $\Delta Q_2/Q_2$ is within the first threshold, processor 190 determines that unknown substance 82 is the first one of the known substances and classifies unknown substance 82 in the class of the first one of the known substances. On the other hand, upon determining that $\Delta Q_1/Q_1$ and $\Delta Q_2/Q_2$ is within the second threshold and not within the first threshold, processor 190 determines that unknown substance 82 is the second one of the known substances and classifies unknown substance 82 in the class of the second one of the known substances. Moreover, upon determining that $\Delta Q_1/Q_1$ is within the second threshold and not within the first threshold and that $\Delta Q_2/Q_2$ is within the first threshold, processor 190 determines that unknown substance 82 is non-uniquely identified where unknown substance 82 is either the first one of the known substances or the second one of the known substances and classifies unknown substance 82 in the class of either the first one or the second one of the known substances. Furthermore, upon determining that $\Delta Q_1/Q_1$ is within the first threshold and that $\Delta Q_2/Q_2$ is within the second threshold and not within the first threshold, processor 190 determines that unknown substance 82 is non-uniquely identified and classifies unknown substance 82 in the class of either the first one or the second one of the known substances. Additionally, upon determining that $\Delta Q_1/Q_1$ is outside the first and second thresholds and that $\Delta Q_2/Q_2$ is outside the first and second thresholds, processor 190 determines that unknown substance 82 cannot be identified and classifies unknown substance 82 as being unidentified.

It is noted that in an alternative embodiment, equation (7) includes at least one of $(C_u - C_{k1})^2$, $(p_u - P_{k1})^2$, $(a_u - a_{k1})^2$, $(Z_{effu} - Z_{effk1})^2$, $(\eta_u - \eta_{k1})^2$, and $(\mu_{pixelu} - \mu_{pixelk1})^2$, equation (8) includes at least one of corresponding $C_{k1}^2$, $P_{k1}^2$, $a_{k1}^2$, $Z_{effk1}^2$, $\eta_{k1}^2$, and $\mu_{pixelk1}^2$, equation (9) includes at leelst one of corresponding $(C_u - C_{k2})^2$, $(p_u - p_{k2})^2$, $(a_u - a_{k2})^2$, $(Z_{effu} - Z_{effk2})^2$, $(\eta_u - \eta_{k2})^2$, and $(\mu_{pixelu} - \mu_{pixelk2})^2$, and equation (10) includes at least one of corresponding $C_{k2}^2$, $p_{k2}^2$, $a_{k2}^2$, $Z_{effk2}^2$, $\eta_{k2}^2$, and $\mu_{pixelk2}^2$. For example, if equation (7) includes $(C_u - C_{kl})^2$ and $(P_u - P_{kl})^2$ and does not include $(a_u - a_{kl})^2$, $(Z_{effu} - Z_{effk1})^2$, $(\eta_u - \eta_{kl})^2$, and $(\mu_{pixelu} - \mu_{pixelk1})^2$, equation (8) includes $C_{k1}^2$ and $P_{k1}^2$, and does not include $a_{k1}^2$, $Z_{effk1}^2$, $\eta_{k1}^2$, and $\mu_{pixelk1}^2$, equation (9) includes $(C_u - C_{k2})^2$ and $(p_u - p_{k2})^2$, and does not include $(a_u - a_{k2})^2$, $(Z_{effu} - Z_{effk2})^2$, $(\eta_u - \eta_{k2})^2$, and $\mu_{pixelu} - \mu_{pixelk2})^2$, and equation (10) includes $C_{k2}^2$ and $p_{k2}^2$, and does not include $a_{k2}^2$, $Z_{effk2}^2$, $\eta_{k2}^2$, and $\mu_{pixelk2}^2$.

As another example, processor 190 applies a weighted approach by applying

$$\Delta R_1 = [W_C(C_u - C_{k1})^2 + W_p(p_u - p_{k1})^2 + W_a(a_u - a_{k1})^2 + W_Z(Z_{effu} - Z_{effk1})^2 + W_\eta(\eta_u - \eta_{k1})^2 + W_\mu(\mu_{pixelu} - \mu_{pixelk1})^2]^{1/2}, \quad \ldots(11)$$

where each of $W_C$, $W_p$, $W_a$, $W_Z$, $W_\eta$, $W_\mu$, are weights or real numbers provided by the user via input device 192 to processor 190. In the example, the user assigns a higher weight $W_p$ to the peak position $p_u$ of unknown substance 82 when processor 190 determines the crystallinity $C_u$ to be at least fifty percent and at most ninety-nine percent. The user assigns the higher weight $W_p$ compared to the weights $W_C$, $W_a$, $W_Z$, $W_\eta$, and $W_\mu$. Moreover, in the example, processor 190 continues to apply the weighted approach by applying

$$R_1 = [W_C C_{k1}^2 + W_p p_{k1}^2 + W_a a_{k1}^2 + W_Z Z_{effk1}^2 + W_\eta \eta_{k1}^2 + W_\mu \mu_{pixelk1}^2]^{1/2}, \quad \ldots(12)$$

by applying

$$\Delta R_2 = [W_C(C_u - C_{k2})^2 + W_p(p_u - p_{k2})^2 + W_a(a_u - a_{k2})^2 + W_Z(Z_{effu} - Z_{effk2})^2 + W_\eta(\eta_u - \eta_{k2})^2 + W_\mu(\mu_{pixelu} - \mu_{pixelk2})^2]^{1/2}, \quad \ldots(13)$$

by applying

$$R_2 = [W_C C_{k2}^2 + W_p p_{k2}^2 + W_a a_{k2}^2 + W_Z Z_{effk2}^2 + W_\eta \eta_{k2}^2 + W_\mu \mu_{pixelk2}^2]^{1/2}$$

$$\ldots(14)$$

calculates a ratio $\Delta R_1/R_1$ and a ratio $\Delta R_2/R_2$. determines whether each of the ratio $\Delta R_1/R_1$ and the ratio $\Delta R_2/R_2$ is within a first limit, which is at most equal to r, or alternatively is within a second limit, which is at most equal to s, where s is greater than r. An example of r includes 0.03 and an example of s includes 0.06. Another example of r includes 0.02 and another example of s includes 0.05. The user provides r and s via input device 192 to processor 190.

Upon determining that each of $\Delta R_1/R_1$ and $\Delta R_2/R_2$ is within the first limit, processor 190 determines that unknown substance 82 is the first one of the known substances and classifies unknown substance 82 in the class of the first one of the known substances. On the other hand, upon determining that $\Delta R_1/R_1$ and $\Delta R_2/R_2$ is within the second limit and not within the first limit, processor 190 determines that unknown substance 82 is the second one of the known substances and classifies unknown substance 82 in the class of the second one of the known substances. Moreover, upon determining that $\Delta R_1/R_1$ is within the second limit and not within the first limit and that $\Delta R_2/R_2$ is within the first limit, processor 190 determines that unknown substance 82 is non-uniquely identified and classifies unknown substance 82 in the class of either the first one or the second one of the known substances. Furthermore, upon determining that $\Delta R_1/R_1$ is within the first limit and that $\Delta R_2/R_2$ is within the second limit and not within the first limit, processor 190 determines that unknown substance 82 is non-uniquely identified and classifies unknown substance 82 in the class of either the first one or the second one of the known substances. Additionally, upon determining that $\Delta R_1/R_1$ is outside the first and second limits and that $\Delta R_2/R_2$ is outside the first and second limits, processor 190 determines that unknown substance 82 cannot be identified and classifies unknown substance 82 as being unidentified.

It is noted that in an alternative embodiment, when equation (11) includes at least one of $W_C(C_u - C_{k1})^2$, $W_p(P_u - P_{k1})^2$, $W_a(a_u - a_{k1})^2$, $W_Z(Z_{effu} - Z_{effk1})^2$, $W_\eta(\eta_u - \eta_{k1})^2$, and $W_\mu(\mu_{pixelu} - \mu_{pixelk1})^2$, equation (12) includes at least one corresponding $W_C C_{k1}^2$, $W_p p_{k1}^2$, $W_a a_{k1}^2$, $W_Z Z_{effk1}^2$, $W_\eta \eta_{k1}^2$, and $W_\mu \mu_{pixelk1}^2$, equation (13) includes at least one of

corresponding $W_C(C_u - C_{k2})^2$, $W_p(p_u - p_{k2})^2$, $W_a(a_u - a_{k2})^2$, $W_z(Z_{effu} - Z_{effk2})^2$, $W_\eta(\eta_u - \eta_{k2})^2$, and $W_\mu(\mu_{pixelu} - \mu_{pixelk2})^2$, and equation (14) includes at least one of corresponding $W_C C_{k2}^2$, $W_p p_{k2}^2$, $W_a a_{k2}^2$, $W_z Z_{effk2}^2$, $W_\eta \eta_{k2}^2$, and $W_\mu \mu_{pixelk2}^2$. For example, if equation (11) includes $W_C(C_u - C_{k1})^2$, $W_p(p_u - p_{k1})^2$ and $W_a(a_u - a_{k1})^2$, and does not include $W_Z(Z_{effu} - Z_{effk1})^2$, $W_\eta(\eta_u - \eta_{k1})^2$, and $W_\mu(\mu_{pixelu} - \mu_{pixelk1})^2$ then equation (12) includes $W_C C_{k1}^2$, $W_p p_{k1}2$ and $W_a a_{k1}^2$, and does not include $W_Z Z_{effk1}^2$, $W_\eta \eta_{k1}^2$, and $W_\mu \mu_{pixelk1}^2$, equation (13) includes $W_c(C_u - C_{k2})^2$, $W_p(p_u - p_{k2})^2$, and $W_a(a_u - a_{k2})^2$, and excludes $W_Z(Z_{effu} - Z_{effk2})^2$, $W_\eta(\eta\mu - \eta_{k2})^2$, and $W_\mu(\mu_{pixelu} - \mu_{pixelk2})^2$, and equation (14) includes $W_C C_{k2}^2$, $W_p p_{k2}^2$, and $W_a a_{k2}^2$, and excludes $W_Z Z_{effk2}^2$, $W_\eta \eta k2^2$, and $W_\mu \mu_{pixelk2}2$. As another example, processor 190 applies a maximum likelihood approach to at least one of the parameters and to at least one of the corresponding specifications to classify unknown substance 82. Processor 190 simultaneously or at the same time processes the electrical output signals from transmission detector 17 and from scatter detector 18, and the projection data from transmission detector 17 to classify substance 82.

Technical effects of the herein described systems and methods for classifying a substance include classifying unknown substance 82 based on a comparison between at least one the parameters and at least of the corresponding specifications. Unknown substance 82 is not classified piecemeal or sequentially but is classified simultaneously upon comparing at least one of the parameters with at least one of the specifications. For example, system 10 does not classify unknown substance 82 based on a comparison between a first one, such as, the linear attenuation coefficient $\mu_{pixelu}$, of the parameters and a corresponding first one, such as $\mu_{pixelk}$, of the specifications and then re-classify unknown substance 82 based on a comparison between a second one, such as $C_k$, of the parameters, and a second one, such as $C_u$, of the specifications. Other technical effects include a higher ability to detector a threat substance and a lower false alarm rate of detecting the threat substance as compared to that of detection by the piecemeal classification.

While the invention has been described in terms of various specific embodiments, those skilled in the art will recognize that the invention can be practiced with modification within the spirit and scope of the claims.

**Claims**

1.    A processor (190) configured to classify an unknown substance (82) based on simultaneously processing a plurality of parameters determined from a plurality of signals that are measured by at least one detector (17,18), wherein the at least one detector is located within a gantry (12) of an imaging system (10).

2.    A processor (190) in accordance with Claim 1, wherein the at least one detector (17,18) includes at least one x-ray detector.

3.    A processor (190) in accordance with any preceding Claim, wherein the at least one detector includes a transmission detector (17) and a scatter detector (18).

4.    A processor (190) in accordance with any preceding Claim, wherein the parameters include at least two of a crystallinity, a peak position, a peak area, an effective atomic number, a packing fraction, and a linear attenuation coefficient.

5.    A processor (190) in accordance with any preceding Claim, wherein the parameters include at least two of a crystallinity, a peak position, a peak area, an effective atomic number, and a packing fraction.

6.    A processor (190) in accordance with any preceding Claim, wherein the at least one detector includes a transmission detector (17) and a scatter detector (18), and wherein both the transmission and scatter detectors are located within the gantry (12) of an imaging system (10).

7.    A processor (190) in accordance with any preceding Claim, further configured to classify the unknown substance (82) as one of a threat substance, a harmless substance, and an unidentifiable substance.

8.    An imaging system (10) for classifying an unknown substance (82), said system comprising:

a source configured to generate energy:

at least one detector (17,18); and
a processor (190) coupled to said source and configured to classify the unknown substance based on simultaneously processing a plurality of parameters determined from a plurality of signals that are measured by said at least one detector, wherein said at least one detector is located within a gantry (12) of said imaging system.

9. An imaging system (10) in accordance with Claim 8, wherein said at least one detector (17,18) includes at least one x-ray detector.

10. An imaging system (10) in accordance with Claim 8 or Claim 9, wherein said at least one detector includes a transmission detector (17) and a scatter detector (18).

**Fig. 1**

Fig. 2

Generate a diffraction profile
of an unknown substance

401

Determine a crystallinity
of the unknown substance

403

A

**Fig. 3**

**Fig. 4**

**Fig. 5**

A

504 | Determine a peak position and a peak area from the diffraction profile

506 | Determine a total scatter cross-section

507 | Multiply the total cross-section by an initial height

508 | Calculate a molecular interference function s(x)

509 | Calculate $I(x) = [s(x)-1]^2$

B

Fig. 6

B

513 | Determine a next iteration cycle height of an independent atom model

514 | Determine a second moment of s(x)

516 | Determine a packing fraction from the second moment

C

**Fig. 7**

Fig. 8

**Fig. 9**

**Fig. 10**

```
        ( C )
          │
          ▼
┌─────────────────────────┐
│    Determine a linear   │
610 │  attenuation coefficient │
└─────────────────────────┘
          │
          ▼
┌─────────────────────────┐
│    Provide a table including │
612 │  a plurality of specifications │
└─────────────────────────┘
          │
          ▼
┌─────────────────────────┐
│   Provide a classification of a │
614 │  plurality of know substances │
└─────────────────────────┘
          │
          ▼
┌─────────────────────────┐
│    Compare at least one of the │
616 │ specifications with at least one of a │
│  plurality of corresponding parameters │
│   to classify the unknown substance │
└─────────────────────────┘
```

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RABIEJ M.** Determination of the Degree of Crystallinity of Semicrystalline Polymers by Means of the ''OptiFit. *Computer Software, POEIMERY,* 2002, vol. 6, 423-427
- Percentage Crystallinity Determination by X-ray Diffraction, XRD-6000 Application Brief. *Kratos Analytical,* 1999
- **HUBBELL, J.H ; VEIGELE, W.J ; BRIGGS, E.A ; BROWN, R.T ; CROMER, D.T ; HOWERTON, R.J.** Atomic Form Factors, Incoherent Scattering Functions and Photon Scattering Cross-sections. *Journal of Physics and Chemical Reference Data,* 1975, vol. 4, 471

- Atomic Form Factors, Incoherent Scattering Functions, and Photon Scattering Cross Sections. *Journal of Physics and Chemical Reference Data,* 1977, vol. 6, 615
- **HUBBELL, J.H ; VEIGELE, W.J ; BRIGGS, E.A ; BROWN, R.T ; CROMER, D.T ; HOWERTON, R.J.** Atomic Form Factors, Incoherent Scattering Functions and Photon Scattering Cross-sections. *Journal of Physics and Chemical Reference Data,* 1975, vol. 4, 471